# EUROPEAN PATENT SPECIFICATION

(11) **EP 2 171 731 B1**
(45) Date of publication and mention of the grant of the patent: **26.02.2014**
(21) Application number: 08758249.0
(22) Date of filing: 26.06.2008
(51) Int. Cl.: H01F 7/08, H01F 7/12, F16K 31/06

(54) **A MAGNETIC ACTUATOR AND A VALVE COMPRISING SUCH AN ACTUATOR**
MAGNETISCHES STELLGLIED UND EIN SOLCHES STELLGLIED UMFASSENDES VENTIL
ACTIONNEUR MAGNÉTIQUE ET VANNE COMPRENANT UN TEL ACTIONNEUR

(30) Priority: 27.06.2007 DK 200700928
(43) Date of publication of application: 07.04.2010
(73) Proprietor: Danfoss A/S, 6430 Nordborg (DK)
(72) Inventor: BIRKELUND, Michael, DK-5500 Middelfart (DK); LARSEN, Jan Lindberg, DK-6640 Lunderskov (DK)
(86) International application number: PCT/DK2008/000240
(87) International publication number: WO 2009/000271

(56) References cited:
- EP-A- 1 351 261
- DE-C- 536 909
- US-A- 1 696 615
- US-A- 2 181 423
- US-A- 2 612 188
- US-A- 2 650 617
- US-A- 2 998 552

## Description

### FIELD OF THE INVENTION

The present invention relates to a magnetic actuator, in particular for use in a magnetic valve. More particularly, the present invention relates to a magnetic actuator which may be used in valves which are driven by means of direct current (DC) as well as in valves which are driven by means of alternating current (AC).

### BACKGROUND OF THE INVENTION

In magnetic DC valves it has been known to shape the stationary part and the movable part in such a manner that one of the parts comprises a protruding part and the other comprises a recess which is shaped and positioned to receive the protruding part during operation of the actuator. This shape has typically been used in order to obtain an increased pulling force at large air gaps at the expense of a decreased pulling force at smaller air gaps. Thereby a more uniform pulling force throughout the working range of the valve is obtained.

Thus, US 6,619,612 discloses a DC valve comprising a magnetic actuator in which a stationary part is provided with a centrally arranged pin, and a movable part is provided with a recess adapted to receive the pin of the stationary part when the actuator operates. The actuator is operated by supplying a DC current to a coil arranged around the actuator. The current induces a magnetic field inside the coil, and the movable part is moved towards the stationary part due to this magnetic field. Disrupting the supply of the DC current will cause the movable part to move in a direction away from the stationary part. The movement of the movable part depends upon the strength of the induced magnetic field, and thereby upon the current supplied to the coil. Movement of the movable part causes a valve element to move relatively to a valve seat, i.e. it causes the valve to open or close.

If the actuator shown in US 6,619,612 were applied in an AC application, the movable part would oscillate due to the alternating current supplied to the coil. This would cause the movable part to repeatedly hit against the stationary part at the frequency of the supplied current. This would cause a high noise level and a high degree of wear on the valve. This is very undesirable.

As mentioned above, it is sometimes a problem in AC valves that a high noise level as well as a high degree of wear on the valve occurs. In order to overcome these problems, almost all AC valves have been provided with a ring made from an electrically conductive material, the ring providing a second magnetic field having a phase which is different from the phase of the main magnetic field used for moving the movable part. The presence of this second magnetic field ensures that the total magnetic force will never go to zero. This total magnetic force has a magnitude which is able to hold the movable part and the stationary part together. Thus, in the case that the magnetic valve is provided with a biasing spring, the total magnetic force should be higher than the force of the biasing spring. Accordingly, noise and wear arising from the movable part repeatedly hitting the stationary part is thereby reduced. A ring as described above is normally referred to as a shading ring. An AC valve with a magnetic actuator being provided with a shading ring is, e.g., shown in JP 101 03 556. However, if the magnetic actuator shown in JP 101 03 556 were applied in a DC application the power needed to operate the actuator would become very high, in particular at relatively large air gaps. A shading ring is also shown in US 2,990,155, but the tapered projection of magnetically conducting material shown here does not have a corresponding recess in the magnetically conducting material of the fixed end of the solenoid tube. Thus, if the magnetic actuator shown in US 2,990,155 were applied in a DC application, the power needed to operate the actuator would become very high due to the air gap, which is at least as wide as the height of the shading ring, leading to a high magnetic resistance.

US 2,998,552 discloses a solenoid valve for fuel injection. The valve has core member provided with a centrally disposed recessed portion into which is press-fitted a copper ring that serves as a shading coil; and such core has a central projecting portion, which may be slightly tapered to snugly fit a cooperating centrally disposed seat formed in the upper end of the plunger insert of a magnetisable material. A copper ring serving as a shading ring is snugly fitted within the insert and the outer wall of the plunger portion, which is also of magnetisable material. A centering pin is secured to the core member.

US 2,612,188 discloses a solenoid valve for a gas valve. The valve has a telescopic stem. A radially extending disc of magnetic material is affixed, so as to constitute a movable armature engageable with the lowermost part of a fixed magnetic circuit. Above the disc, a shading ring is provided completely encircling the reduced portion of an exterior element of the telescopic stem. Such a shading ring may be formed of copper or other suitable highly conductive material.

US 2,181,423 discloses a solenoid valve with a sleeve, which at an upper end has a core stop comprising a center pin member of magnetic material and a surrounding sleeve member of non-magnetic material of relatively high conductivity. The sleeve is provided with a lower conical extremity. The pin is provided with a head at its lower end, said head having a conical portion at the lower extremity thereof.

US 2,650,617 discloses a solenoid valve with a solenoid plunger having a longitudinal bore therethrough, into which is pressed at the upper end of the plunger, a plug of magnetic materiel. The plug is provided with a rounded head at its upper end. The rounded head of the plug is adapted to engage the conical recess in the lower surface thereby to center the upper end of the plunger within the sleeve member when it is attracted to its upward position. The upper end of plunger is also provided with a counter bore into which is press-fitted a cylindrical shading member of non-magnetic conducting material.

US 1,696,615 discloses an electromagnet with a plunger having a convex end. To cooperate with the convex end of the plunger, a side frame is provided with an oppositely rounded or concave surface. The convexly rounded end of the plunger and the concavely rounded surface of the frame thus constitute complementary engaging surfaces when the plunger is operated to the attracted position within a core space of windings.

DE 536 909 C discloses an electromagnetic switch with a U-shaped anchor with a solenoid surrounding one branch of the U-shape. An end of the U-branch is provided with a recess. The switch is provided with a closing and opening lever that will close, when the solenoid is energised. The lever is provided with a protrusion, which cooperates with recess of the end of the branch of the U-shape, when the solenoid is energized.

EP 1 351 261 discloses an electromagnet with a T-shaped armature symmetrical with a magnet core, having a transverse limb closing the magnetic circuit. The central limb points towards a bridge of the magnetic core. An air gap intervenes between the free end of the central limb and the bridge center. On each core side limb an enlarged head accommodates a short-circuiting ring (pole shading). The inner profile formed by the components is square or rectangular.

None of the prior art documents cited disclose solenoid valves that are capable of an increased moving force at large air gaps between anchor and solenoid, that are capable of obtaining the advantage of increased moving force at the same time as incorporating a shading ring, and which, also at the same time as increasing the moving force and incorporating a shading ring, are capable of minimizing the dimensions of the solenoid valve along the longitudinal extension of the anchor.

### SUMMARY OF THE INVENTION

It is, thus, an object of the invention to provide a magnetic actuator which is suitable for use in DC applications as well as for use in AC applications.

It is a further object of the invention to provide a magnetic actuator in which the moving force is increased at large air gaps as compared to similar prior art magnetic actuators.

It is an even further object of the invention to provide a magnetic actuator in which the noise level is reduced as compared to similar prior art magnetic actuators.

It is an even further object to provide a magnetic actuator in which the wear on the actuator during operation is reduced as compared to similar prior art magnetic actuators.

It is an even further object of the invention to provide a magnetic valve which can be applied in DC applications as well as in AC applications.

According to a first aspect of the invention the above and other objects are fulfilled by providing a magnetic actuator comprising:
- a stationary part made from a magnetically conductive material,
- a movable part made from a magnetically conductive material,
- a coil arranged circumferentially relatively to the movable part in such a manner that the movable part can be moved relatively to the stationary part in response to a magnetic field induced as a result of an electrical current passing through the coil, and
- a shading ring arranged peripherally on the stationary part or on the movable part,
wherein the stationary part and the movable part are shaped in such a manner that one of the stationary part and the movable part is provided with a protruding part, and the other one of the stationary part and the movable part is provided with a corresponding recess adapted to completely receive the protruding part and the protruding part is in the form of a pin arranged substantially centrally on the movable part or the stationary part, the shading ring is arranged peripherally next to the protruding part.

In the present context the term 'stationary part' should be interpreted to be a part of the actuator which remains substantially stationary with respect to the application where the actuator is positioned. Thus, the stationary part does not need to be stationary with respect to the ground, but may be allowed to move along with the application where the actuator is positioned. For instance, if the application is positioned on board a moving vehicle, the stationary part will normally move along with the vehicle, but will not move relatively to the vehicle.

The movable part is movable relatively to the stationary part. Furthermore, supplying current to the coil causes the movable part to move relatively to the stationary part, and this movement results in a desired operation of the actuator.

The stationary part as well as the movable part is made from a magnetically conductive material, such as a ferromagnetic material, e.g. W 1.4105 or AISI 430.

The coil is arranged circumferentially relatively to the movable part. Furthermore, the coil is arranged in such a manner that the movable part moves in response to a magnetic field induced as a result of an electrical current passing through the coil. Preferably, the movable part is arranged inside the coil. When a current is applied to the coil, a magnetic field is induced in accordance with Ampere's law. Thereby the stationary part as well as the movable part will constitute electromagnets, and the end parts facing each other will accordingly attract each other, thereby causing movement of the movable part.

The magnetic actuator is provided with a shading ring arranged on the stationary part or on the movable part. When an AC current is supplied to the coil in order to induce a magnetic field as described above, the alternating magnetic field induces a current in the shading ring, thereby creating a second magnetic field. The second magnetic field has a phase which is different from the phase of the main magnetic field which is used for moving the movable part. Thereby it is ensured that the total magnetic force never goes to zero. Thereby the shading ring prevents the movable part from repeatedly hitting the stationary part when an AC current is supplied to the coil, and the noise and wear potentially arising as a consequence of such oscillating movements is thereby considerably reduced. Accordingly, the magnetic actuator of the present invention is suitable for use in AC applications, such as AC valves.

When an AC current is supplied to the coil, the movable part will in some cases be moved so fast that it reaches the stationary part before the induced alternating magnetic field reaches zero. The shading ring will then maintain the movable part in this position. In other cases the movable part will be moved somewhat slower, and the alternating magnetic field will cause the movement of the movable part towards the stationary part to be stepwise.

Furthermore, the stationary part and the movable part are shaped in such a manner that one is provided with a protruding part, and the other is provided with a corresponding recess adapted to receive the protruding part. The protruding part may be provided on the stationary part, in which case the recess is provided on the movable part. Alternatively, the protruding part may be provided on the movable part, in which case the recess is provided on the stationary part. When the magnetic actuator is operated, and the movable part thereby moves relatively to the stationary part, the protruding part and the recess perform relative movements. This has the consequence that the minimum distance between the movable part and the stationary part is not altered significantly during such relative movements, i.e. the minimum distance is maintained at a relatively low level, even at a relatively large 'air gap' between the stationary part and the movable part. Thereby the actuator is capable of providing a substantially larger pulling force as compared to similar actuators which are not provided with a protruding part and a corresponding recess and being operated at the same power level, partly because the flux loss in the region between the movable part and the stationary part is minimised, but also because the component of the magnetic force in the direction of movement can be kept at a relatively high level. This is particularly the case at a relatively large 'air gap'. Thus, by means of the actuator according to the invention, a large pulling force can be obtained without increasing the necessary power level, with a lower energy loss due to heat dissipation in the component of the actuator, without increasing the manufacturing costs, and without increasing the size of the actuator. This is very advantageous. In the case that the actuator is applied in a magnetic valve, a relatively large 'air gap' normally occurs in valves where a large fluid flow may be allowed through the valve. Accordingly, the actuator of the present invention is very suitable for use in valves which are expected to be operated at relatively large fluid flows. However, the actuator may also be used for applications where a large air gap is not expected, i.e. the actuator may be used for many various applications.

Furthermore, the specific design of the stationary part and the movable part renders the actuator suitable for use in DC applications. Accordingly, the actuator of the present invention can be used in DC applications as well as in AC applications, and it is therefore not necessary to manufacture various kinds of actuators for various purposes. This reduces the manufacturing costs. Furthermore, the magnetic field is led more efficiently in this way.

The protruding part may form an integral part of the movable part or the stationary part. In the present context the term 'integral part' should be interpreted to mean that the protruding part and the stationary part or the movable part, respectively, are manufactured in a single piece and from the same material. This embodiment is advantageous because it is easy and cost effective to manufacture the actuator.

As an alternative, the protruding part may be attached to the stationary part or the movable part, e.g. in the form of a pin which has been pressed into the stationary part or the movable part.

As an alternative, the protruding part may be arranged on or form part of the movable part and the recess may be formed on the stationary part, as mentioned above.

The protruding part is in the form of a pin arranged substantially centrally on the movable part or the stationary part. In this case the recess is a hole arranged centrally on the part which does not have the protruding part formed thereon, the recess having a size and a shape which matches the size and shape of the protruding part.

As an alternative, the protruding part may have any other suitable shape, such as a peripheral ring arranged on the movable part or the stationary part. In this case the recess is a peripheral groove arranged on the part which does not have the protruding part arranged thereon.

The protruding part may have a conical or frusto-conical shape, e.g. defining a top angle within the interval 10°-30°, such as within the interval 15°-25°, such as approximately 20°. In this case the protruding part preferably has a substantially circular cross section, the area of the cross section decreasing as a function of distance from an end surface of the part having the protruding part formed thereon. One advantage of this embodiment as compared to an embodiment where the protruding part has a substantially cylindrical shape is, that it is prevented that the magnetic force in the direction of movement decreases significantly at small air gaps. The magnetic force in the direction of movement is given by F=1/2·I²·dL/dx, where I is the current supplied to the coil and dL/dx is the derivative of self induction relatively to the direction of movement, i.e. the change in the size of the air gap. Accordingly, using a substantially cylindrical protruding part may result in the magnetic force in the direction of movement becoming very small at small air gaps. However, using a conical or frusto-conical shape, a somewhat larger force in the direction of movement is maintained.

Alternatively or additionally, the recess may have a conical or frusto-conical shape.

The protruding part may have a length which is within the interval 15%-30% of a representative diameter of an end surface of the part having the recess formed therein. According to this embodiment it is obtained that, in typical designs, the forces in a direction substantially perpendicular to the direction of movement are optimised throughout the entire air gap.

The shading ring may be arranged on the stationary part. Alternatively, it may be arranged on the movable part. Furthermore, the shading ring may be arranged on the same part on which the protruding part is arranged, or it may be arranged on the part which does not have the protruding part arranged thereon.

The shading ring may preferably be made from cupper, silver or aluminium.

The magnetic actuator may further comprise mechanical biasing means adapted to mechanically bias the movable part in a direction away from the stationary part. According to this embodiment, the movable part will be in a position which is as far away as possible from the stationary part when the actuator is in a non-energized state. When the actuator is energized, the movable part is then moved in a direction towards the stationary part.

The mechanical biasing means may advantageously be or comprise a spring, such as a compressible spring.

According to a second aspect of the invention the above and other objects are fulfilled by providing a magnetic valve comprising:
- a valve seat,
- a valve closing element being movable between a position in which it abuts the valve seat, thereby closing the valve, and positions in which it does not abut the valve seat, thereby allowing fluid to pass the valve, and
- a magnetic actuator according to the first aspect of the invention, the movable part of said magnetic actuator being connected to the valve closing element, the valve thereby being opened or closed in response to movements of the movable part.

It should be noted that a skilled person would readily recognise that any feature described in combination with the first aspect of the invention may equally be combined with the second aspect of the invention, and vice versa.

The valve closing element may be movable between only two positions, i.e. one in which the valve is closed and one in which the valve is open. Alternatively, the valve closing may be movable between a plurality of positions, e.g. continuously, the plurality of positions defining various degrees of opening of the valve.

Since the valve according to the second aspect of the invention comprises a magnetic actuator according to the first aspect of the invention, the advantages described above also apply to the valve. Thus, the valve is suitable for use in DC applications as well as AC applications, an enhanced pulling force is obtained without increasing the manufacturing costs, etc.

The valve may be of a kind which is open in a non-energized state, i.e. a so-called normally open (NO) valve, of a kind which is closed in a non-energized state, i.e. a so-called normally closed (NC) valve, or of any other suitable kind.

### BRIEF DESCRIPTION OF THE DRAWINGS

The invention will now be described in further detail with reference to the accompanying drawings in which
Fig. 1 is a cross sectional view of an actuator according to a first embodiment of the invention in a first position,
Fig. 2 is a cross sectional view of the actuator of Fig. 1 in a second position,
Fig. 3 is a cross sectional view of an actuator according to a second embodiment of the invention in a first position,
Fig. 4 is a cross sectional view of the actuator of Fig. 3 in a second position,
Fig. 5 is a cross sectional view of a valve according to an embodiment of the invention in an open position, and
Fig. 6 is a cross sectional view of the valve of Fig. 5 in a closed position.

### DETAILED DESCRIPTION OF THE DRAWINGS

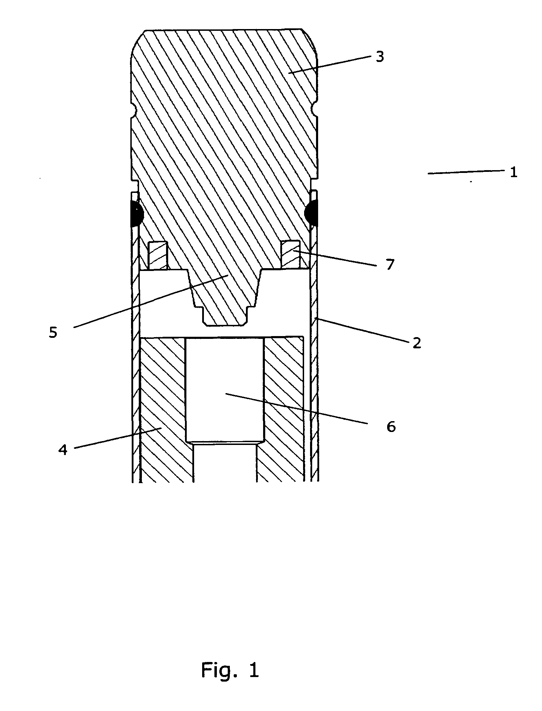

Fig. 1 is a cross sectional view of a magnetic actuator 1 according to a first embodiment of the invention. The actuator 1 comprises a housing 2 enclosing a stationary part 3 and a movable part 4, the stationary part 3 as well as the movable part 4 being made from a magnetically conductive material. A coil (not shown) is arranged circumferentially around the stationary part 3 and the movable part 4. Accordingly, when a current is running through the coil, a magnetic field is induced in the region where these parts 3, 4 are positioned.

The stationary part 3 is provided with a protruding part 5 in the form of a pin arranged centrally on the stationary part 3. The movable part 4 is provided with a corresponding recess 6 adapted to receive the protruding part 5 when the movable part 4 is moved in a direction towards the stationary part 3.

The stationary part 3 is further provided with a shading ring 7 arranged peripherally on the stationary part 3.

In Fig. 1 the magnetic actuator 1 is shown in a position where the movable part 4 is located as far away from the stationary part 3 as possible. However, even though the distance between planar parts of the stationary part 3 and the movable part 4 are relatively far from each other, the minimum distance between the stationary part 3 and the movable part 4 is relatively small. This minimum distance is defined by the distance between the tip of the protruding part 5 and an edge part of the movable part 4. Thus, the small minimum distance is caused by the special design of the stationary part 3 with the protruding part 5, in combination with the special design the movable part 4 with the recess 6. The fact that the minimum distance is relatively small, even at large distances between the stationary part 3 and the movable part 4, ensures that it is possible to provide a relatively large pulling force for moving the movable part 4, when the stationary part 3 and the movable part 4 are positioned relatively far from each other, such as in the position shown in Fig. 1. However, when the stationary part 3 and the movable part 4 are positioned relatively close to each other, the pulling force is reduced. Thereby a more uniform pulling force throughout the entire working range of the actuator 1 is obtained.

The shading ring 7 is made from an electrically conductive material and is adapted to provide a second magnetic field having a phase which is different from the phase of the magnetic field induced by the coil. Accordingly, it is prevented that the total magnetic force originating from the magnetic field used for moving the movable part as well as from the magnetic field provided by the shading ring goes to zero. Thereby, the movable part 4 is prevented from repeatedly hitting the stationary part 3 as described above. Accordingly, the noise level of the operating actuator 1, as well as wear on the actuator 1, is reduced.

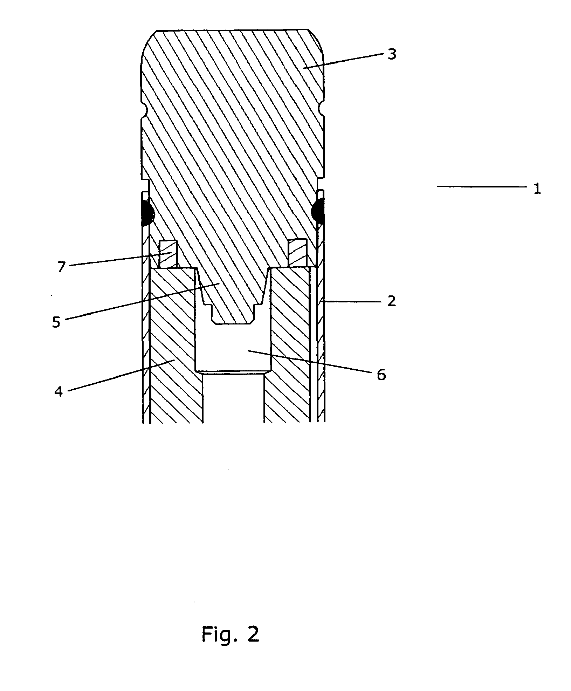

Fig. 2 is a cross sectional view of the magnetic actuator 1 of Fig. 1. In Fig. 2 the movable part 4 is positioned as close as possible to the stationary part 3. Furthermore, it can be seen from Fig. 2 that the protruding part 5 is accommodated in the recess 6 as the movable part 4 is moved towards the stationary part 3.

The magnetic actuator 1 of Figs. 1 and 2 preferably operates in the following manner. In a non-energized state, i.e. when no current is supplied to the coil, the movable part 4 will be in the position shown in Fig. 1, due to gravity, or possibly due to a biasing spring which is not shown in the Figures. When it is desired to operate the actuator 1, current is supplied to the coil, thereby inducing a magnetic field which pulls the movable part 4 in a direction towards the stationary part 3, i.e. towards the position shown in Fig. 2. In order to move the movable part 4 back to the position shown in Fig. 1, the coil is de-energized.

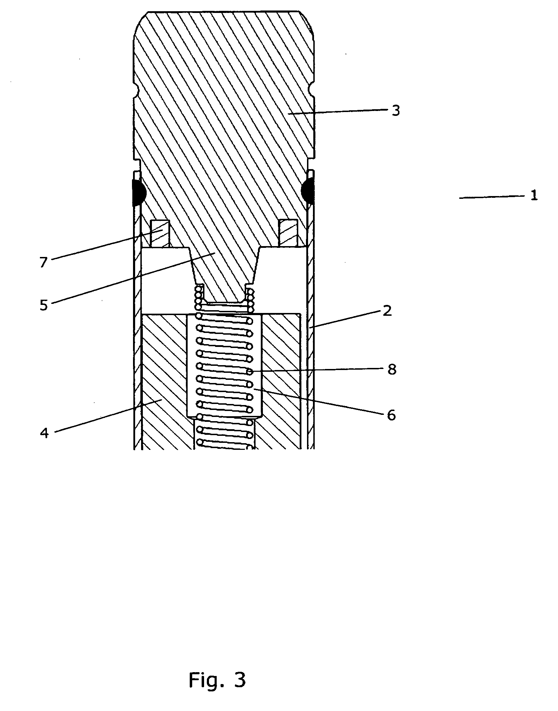

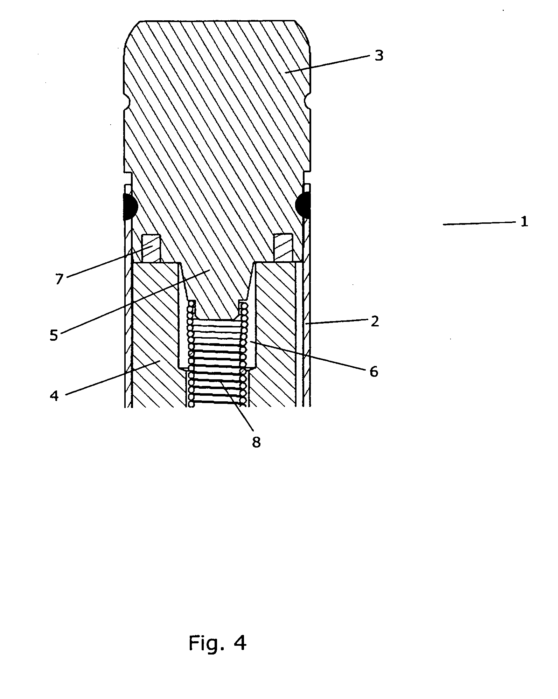

Figs. 3 and 4 are cross sectional views of a magnetic actuator 1 according to a second embodiment of the invention. The magnetic actuator 1 shown in Figs. 3 and 4 is very similar to the actuator shown in Figs. 1 and 2. However, the actuator 1 of Figs. 3 and 4 has further been provided with a spring 8 mechanically biasing the movable part 4 in a direction away from the stationary part 3. Accordingly, when the actuator 1 is operated to move the movable part 4 in a direction towards the stationary part 3, it is necessary to compress the spring 8, i.e. an additional pulling force corresponding to the force needed to compress the spring 8 must be applied in order to move the movable part 4. Thus, the spring 8 ensures that a valve operated by the actuator 1 is closed sufficiently tight in a de-energized state, regardless of the orientation of the valve, i.e. even if the valve is orientated in such a manner that the force of gravity can not ensure that the valve is closed in a de-energized state.

In Fig. 3 the actuator 1 is shown in a position where the movable part 4 is positioned as far away as possible from the stationary part 3, and in Fig. 4 the movable part 4 is positioned as close as possible to the stationary part 3. It is clear from Fig. 4 that the spring 8 has been compressed.

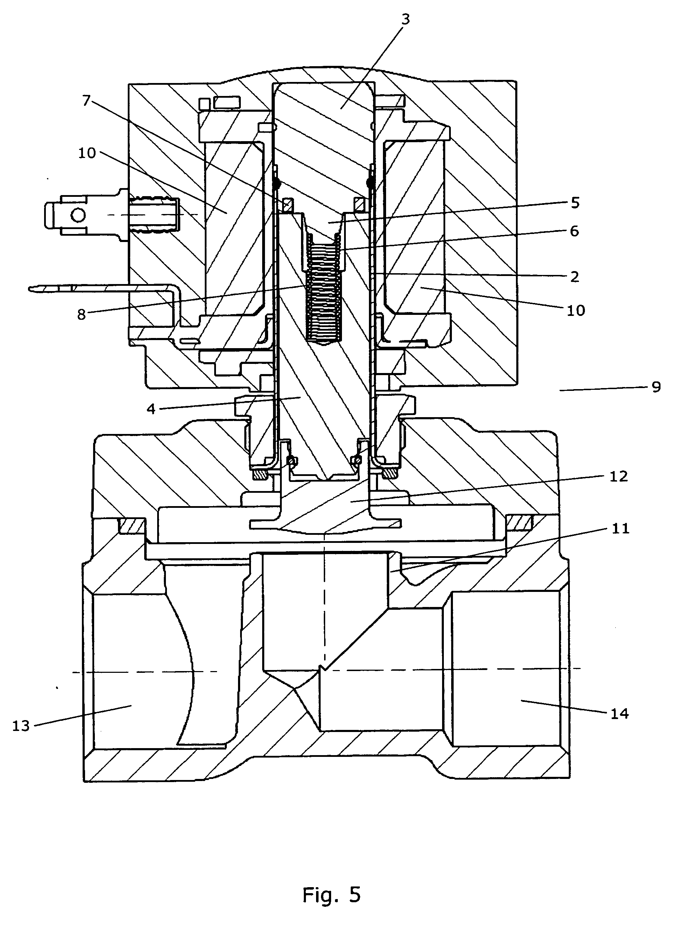

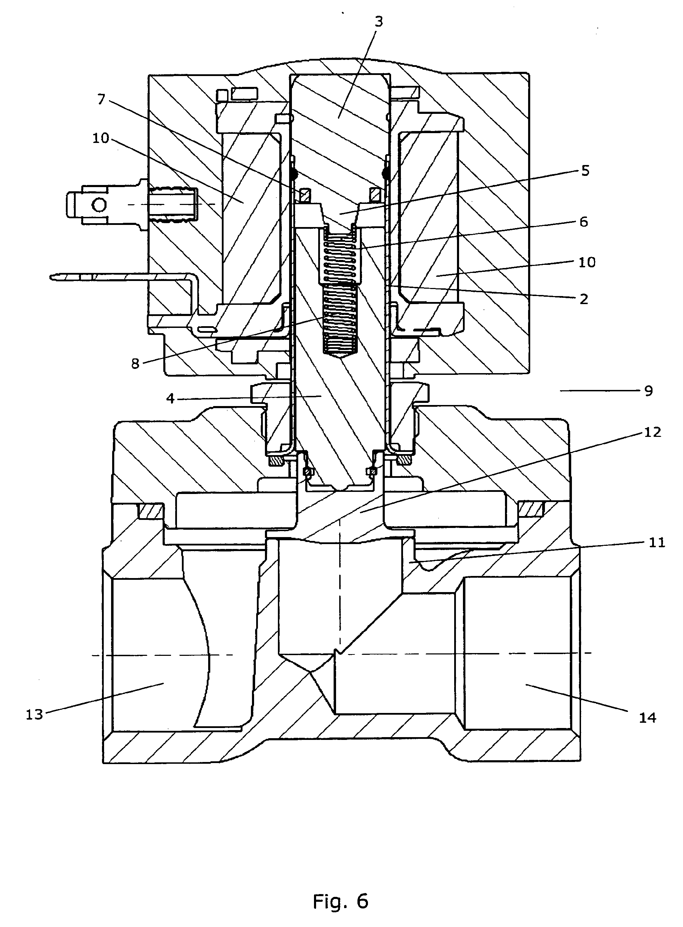

Figs. 5 and 6 are cross sectional views of a magnetic valve 9 comprising the magnetic actuator of Figs. 3 and 4. A coil 10 is arranged circumferentially around the actuator. The valve 9 further comprises a valve seat 11 and a valve closing element 12 attached to the movable part 4 of the actuator. The valve seat 11 is arranged between a fluid inlet 13 and a fluid outlet 14 of the valve 9. The valve closing element 12 is movable between a position where it abuts the valve seat 11 and positions where it does not abut the valve seat 11. When the valve closing element 12 abuts the valve seat 11 a flow of fluid from the fluid inlet 13 towards the fluid outlet 14 is prevented, i.e. the valve 9 is closed. When the valve closing element 12 does not abut the valve seat 11, a flow of fluid is allowed to pass from the fluid inlet 13 to the fluid outlet 14, i.e. the valve 9 is open. The fluid flow will, in this case, depend on the degree of opening, i.e. on how far from the valve seat 11 the valve closing element 12 is positioned. Since the valve closing element 12 is attached to the movable part 4 of the actuator, the position of the valve closing element 12 is determined by the position of the movable part 4. Thus, when the movable part 4 is pulled towards the stationary part 3 the valve closing element 12 is moved away from the valve seat 11, i.e. the valve 9 is opened. Similarly, when the movable part 4 is moved in a direction away from the stationary part 3, the valve closing element 12 is moved towards the valve seat 11 until it abuts the valve seat 11 and the valve 9 is thereby closed.

The spring 8 mechanically biases the movable part 4 in a direction away from the stationary part 3. Accordingly, when no current is supplied to the coil 10 the movable part 4 will be in a position which is as far away as possible from the stationary part 3, i.e. the valve closing element 12 will be in a position where it abuts the valve seat 11, and the valve 9 will thereby be closed. Accordingly, the valve 9 is of a kind which is closed in a non-energized state, a so-called 'normally closed' (NC) valve.

Fig. 5 shows the valve 9 in an open position, i.e. the movable part 4 is as close as possible to the stationary part 4, and the valve closing element 12 does not abut the valve seat 11. Fig. 6 shows the valve 9 in a closed position, i.e. the movable part 4 is as far away as possible from the stationary part 3, and the valve closing element 12 abuts the valve seat 11.

## Claims

1. A magnetic actuator (1) comprising:
- a stationary part (3) made from a magnetically conductive material,
- a movable part (4) made from a magnetically conductive material,
- a coil (10) arranged circumferentially relatively to the movable part (4) in such a manner that the movable part (4) can be moved relatively to the stationary part (3) in response to a magnetic field induced as a result of an electrical current passing through the coil (10), and
- a shading ring (7) arranged peripherally on the stationary part (3) or on the movable part (4),
wherein the stationary part (3) and the movable part (4) are shaped in such a manner that one of the stationary part (3) and the movable part (4) is provided with a protruding part (5), and the other one of the stationary part (3) and the movable part (4) is provided with a corresponding recess (6) adapted to completely receive the protruding part (5) and the protruding part (5) is in the form of a pin arranged substantially centrally on the movable part (4) or the stationary part (3), the shading ring (7) is arranged peripherally next to the protruding part (5).

2. A magnetic actuator (1) according to claim 1, wherein the protruding part (5) forms an integral part of the movable part (4) or the stationary part (3).

3. A magnetic actuator (1) according to claim 1 or 2, wherein the protruding part (5) is arranged on or forms part of the stationary part (3) and the recess (6) is formed on the movable part (4).

4. A magnetic actuator (1) according to claim 1, wherein the protruding part (5) has a conical or frusto-conical shape.

5. A magnetic actuator (1) according to claim 4, wherein the conical or frusto-conical shape defines a top angle within the interval 10°-30°.

6. A magnetic actuator (1) according to any of the preceding claims, wherein the shading ring (7) is arranged on the stationary part (3).

7. A magnetic actuator (1) according to any of the preceding claims, further comprising mechanical biasing means adapted to mechanically bias the movable part (4) in a direction away from the stationary part (3).

8. A magnetic actuator (1) according to claim 7, wherein the mechanical biasing means comprises a spring (8).

9. A magnetic valve (9) comprising:
- a valve seat (11),
- a valve closing element (12) being movable between a position in which it abuts the valve seat (11), thereby closing the valve (9), and positions in which it does not abut the valve seat (11), thereby allowing fluid to pass the valve (9), and
- a magnetic actuator (1) according to any of the preceding claims, the movable part (4) of said magnetic actuator (1) being connected to the valve closing element (12), the valve (9) thereby being opened or closed in response to movements of the movable part (4).

10. A magnetic valve (9) according to claim 9, wherein the valve (9) is a solenoid valve.

11. A magnetic valve (9) according to claim 9 or 10, wherein the valve (9) is of a kind which is open in a non-energized state.

12. A magnetic valve (9) according to claims 9 or 10, wherein the valve (9) is of a kind which is closed in a non-energized state.

## Patentansprüche

1. Ein magnetischer Aktuator (1) mit:
- einem stationären Teil (3) aus magnetisch leitendem Material,
- einem beweglichen Teil (4) aus magnetisch leitendem Material,
- einer Spule (10) angeordnet am Umfang relativ zum beweglichen Teil in einer solchen Weise, dass der bewegliche Teil (4) im Verhältnis zum stationären Teil (3) als Antwort auf ein Magnetfeld bewegbar ist, das als ein Ergebnis eines durch die Spule (10) fließenden Stroms induziert wird, und
- einem Schattenring (7) angeordnet am Umfang des stationären Teils (3) oder des beweglichen Teils (4),
**dadurch gekennzeichnet, dass** der stationäre Teil (3) und der bewegliche Teil (4) derart ausgebildet sind, dass einer von stationärem Teil (3) und beweglichem Teil (4) mit einem vorstehenden Teil (5) versehen ist, und der andere von stationärem Teil (3) und beweglichem Teil (4) mit einer entsprechenden Vertiefung (6) versehen ist, die zur kompletten Aufnahme des vorstehenden Teils (5) vorgesehen ist, der vorstehende Teil (5) die Form eines Stifts hat, der im Wesentlichen zentral am beweglichen Teil (4) oder am stationären Teil (3) angeordnet ist, und der Schattenring (7) umfänglich neben dem vorstehenden Teil (5) angeordnet ist.

2. Ein magnetischer Aktuator (1) nach Anspruch 1, **dadurch gekennzeichnet, dass** der vorstehende Teil (5) einteilig mit dem beweglichen Teil (4) oder dem stationären Teil (3) ausgebildet ist.

3. Ein magnetischer Aktuator (1) nach Anspruch 1 oder 2, **dadurch gekennzeichnet, dass** der vorstehende Teil (5) angeordnet am oder Teil vom stationären Teil (3) ist und die Vertiefung (6) am beweglichen Teil (4) ausgebildet ist.

4. Ein magnetischer Aktuator (1) nach Anspruch 1, **dadurch gekennzeichnet, dass** der vorstehende Teil (5) die Form eines Kegels oder eines Kegelstumpfs hat.

5. Ein magnetischer Aktuator (1) nach Anspruch 4, **dadurch gekennzeichnet, dass** die Kegelform oder die Kegelstumpfform einen oberen Winkel im Bereich 10° bis 30° abgrenzt.

6. Ein magnetischer Aktuator (1) nach jedem der vorhergehenden Ansprüche, **dadurch gekennzeichnet, dass** der Schattenring (7) am stationären Teil (3) angeordnet ist.

7. Ein magnetischer Aktuator (1) nach jedem der vorhergehenden Ansprüche, **dadurch gekennzeichnet, dass** mechanische Vorspannungsmittel zur mechanischen Vorspannung des beweglichen Teils (4) in eine Richtung weg vom stationären Teil (3) vorgesehen sind.

8. Ein magnetischer Aktuator (1) nach Anspruch 4, **dadurch gekennzeichnet, dass** die mechanischen Vorspannungsmittel eine Feder (8) aufweisen.

9. Ein magnetisches Ventil (9) mit:
- einem Ventilsitz (11),
- einem Ventilschliesselement (12) beweglich zwischen einer Position, bei der es am Ventilsitz (11) anliegt und dabei das Ventil (9) schließt, und einer Position, bei der es nicht am Ventilsitz (11) anliegt wobei Flüssigkeit durch das Ventil (9) fließen kann, und
- ein magnetischer Aktuator (1) nach jedem der vorhergehenden Ansprüche, wobei der bewegliche Teil (3) des magnetischen Aktuators (1) mit dem Ventilschliesselement (12) verbunden ist, so dass das Ventil (9) als Antwort auf Bewegungen des beweglichen Teils (4) geöffnet oder geschlossen wird.

10. Ein magnetisches Ventil (9) nach Anspruch 9, **dadurch gekennzeichnet, dass** das Ventil (9) ein Solenoidventil ist.

11. Ein magnetisches Ventil (9) nach Anspruch 9 oder 10, **dadurch gekennzeichnet, dass** das Ventil (9) von einem Typ ist, das in einem nicht erregten Zustand offen ist.

12. Ein magnetisches Ventil (9) nach Anspruch 9 oder 10, **dadurch gekennzeichnet, dass** das Ventil (9) von einem Typ ist, das in einem nicht erregten Zustand geschlossen ist.

## Revendications

1. Actionneur magnétique (1) comprenant :
- une partie fixe (3) réalisée à partir d'un matériau magnétiquement conducteur,
- une partie mobile (4) réalisée à partir d'un matériau magnétiquement conducteur,
- une bobine (10) agencée de manière circonférentielle par rapport à la partie mobile (4) de telle manière que la partie mobile (4) puisse être déplacée par rapport à la partie fixe (3) en réponse à un champ magnétique induit comme résultat d'un courant électrique passant à travers la bobine (10), et
- une bague de déphasage (7) agencée de manière périphérique sur la partie fixe (3) ou sur la partie mobile (4),
dans lequel la partie fixe (3) et la partie mobile (4) sont profilées de telle manière qu'une de la partie fixe (3) et la partie mobile (4) soit pourvue d'une partie en saillie (5) et l'autre de la partie fixe (3) et la partie mobile (4) soit pourvue d'un évidement correspondant (6) adapté pour recevoir complètement la partie en saillie (5) et la partie en saillie (5) a la forme d'une tige agencée sensiblement centralement sur la partie mobile (4) ou la partie fixe (3), la bague de déphasage (7) est agencée de manière périphérique à côté de la partie en saillie (5).

2. Actionneur magnétique (1) selon la revendication 1, dans lequel la partie en saillie (5) forme une partie intégrale de la partie mobile (4) ou de la partie fixe (3).

3. Actionneur magnétique (1) selon la revendication 1 ou 2, dans lequel la partie en saillie (5) est agencée sur ou fait partie de la partie fixe (3) et l'évidement (6) est formé sur la partie mobile (4).

4. Actionneur magnétique (1) selon la revendication 1, dans lequel la partie en saillie (5) a une forme conique ou tronconique.

5. Actionneur magnétique (1) selon la revendication 4, dans lequel la forme conique ou tronconique définit un angle au sommet dans l'intervalle de 10° à 30°.

6. Actionneur magnétique (1) selon l'une quelconque des revendications précédentes, dans lequel la bague de déphasage (7) est agencée sur la partie fixe (3).

7. Actionneur magnétique (1) selon l'une quelconque des revendications précédentes, comprenant en outre des moyens de rappel mécaniques adaptés pour solliciter mécaniquement la partie mobile (4) dans une direction s'éloignant de la partie fixe (3).

8. Actionneur magnétique (1) selon la revendication 7, dans lequel les moyens de rappel mécaniques comprennent un ressort (8).

9. Vanne magnétique (9) comprenant :
- un siège de vanne (11),
- un élément de fermeture de vanne (12) mobile entre une position dans laquelle il est en butée contre le siège de vanne (11), en fermant ainsi la vanne (9), et des positions dans lesquelles il n'est pas en butée contre le siège de vanne (11), en permettant ainsi à un fluide de traverser la vanne (9), et
- un actionneur magnétique (1) selon l'une quelconque des revendications précédentes, la partie mobile (4) dudit actionneur magnétique (1) étant connectée à l'élément de fermeture de vanne (12), la vanne (9) étant ainsi ouverte ou fermée en réponse à des mouvements de la partie mobile (4).

10. Vanne magnétique (9) selon la revendication 9, dans laquelle la vanne (9) est une électrovanne.

11. Vanne magnétique (9) selon la revendication 9 ou 10, dans laquelle la vanne (9) est d'un type qui est ouvert dans un état non excité.

12. Vanne magnétique (9) selon la revendication 9 ou 10, dans laquelle la vanne (9) est d'un type qui est fermé dans un état non excité.
